(19) Europäisches Patentamt
European Patent Office
Office européen des brevets

(11) Veröffentlichungsnummer : **0 106 965**
**B1**

(12) **EUROPÄISCHE PATENTSCHRIFT**

(45) Veröffentlichungstag der Patentschrift :
11.12.85

(51) Int. Cl.⁴ : **A 22 C 13/00**

(21) Anmeldenummer : **83108173.2**

(22) Anmeldetag : **18.08.83**

(54) **Wursthülle.**

(30) Priorität : **24.09.82 DE 8226938 U**

(43) Veröffentlichungstag der Anmeldung :
**02.05.84 Patentblatt 84/18**

(45) Bekanntmachung des Hinweises auf die Patenterteilung : **11.12.85 Patentblatt 85/50**

(84) Benannte Vertragsstaaten :
**AT BE CH DE FR IT LI NL**

(56) Entgegenhaltungen :
**DE-A- 2 032 024
DE-A- 2 220 283
DE-A- 2 801 545
US-A- 3 251 201
MELLIAND TEXTILBERICHTE INTERNATIONAL,
Band 63, Nr. 5, Mai 1982, Seiten 348-351, Ludwigburg,
DE, B. HEPWORTH: "R/L-Gestricke in ihrem mechanischen und dimensionalen Verhalten"**

(73) Patentinhaber : **Huckfeldt & Thorlichen
Basshorn 11
D-2082 Tornesch (DE)**

(72) Erfinder : **Lange, Johannes
An der Retloh 18
D-2085 Quickborn (DE)**
Erfinder : **Huckfeldt, Gebhard R.
i. Fa. Huckfeldt & Thorlichen Basshorn 11
D-2082 Tornesch (DE)**

(74) Vertreter : **Glawe, Delfs, Moll & Partner Patentanwälte
Postfach 26 01 62 Liebherrstrasse 20
D-8000 München 26 (DE)**

## Beschreibung

Die Erfindung bezieht sich auf eine Wursthülle bestehend aus textiler Maschenware und einer Imprägnierung aus faserhaltiger Quellmasse wie Collagen.

Es sind künstliche Wursthüllen aus Maschenware bekannt, deren Fäden ausschließlich maschenförmig gebunden sind und die sich daher innerhalb der Maschen gegeneinander verschieben können. Unter dem Fülldruck, der in der Wursthülle Kräfte hervorruft, die nach der « Kesselformel » in Umfangsrichtung doppelt so groß wie in Längsrichtung sind, werden die Maschen in Umfangsrichtung gedehnt, während sie sich in Längsrichtung kürzen, so daß die Wursthülle unabhängig von der Schlauchform, in welcher sie ursprünglich hergestellt wurde, eine blasenförmig aufgeblähte Gestalt annimmt. Derartige Hüllen sind daher im allgemeinen für die Praxis nicht brauchbar. Es wurde auch erwogen, solche Hüllen mit einer Imprägnierung zu versehen (DE-B-24 33 751, Spalte 1, Zeilen 53-56), wobei man von der plausiblen Annahme ausging, daß nur solche Imprägniermittel mit Maschenware kombinierbar seien, die aufgrund sehr hoher Elastizität der starken Dehnung des Gewirks in der Größenordnung von 100 % und mehr zu folgen vermögen. Zum Wesen einer Imprägnierung gehört es nämlich, daß sie äußerst dünn ist, so daß ihre Eigenfestigkeit erfahrungsgemäß im Vergleich mit der des textilen Grundmaterials so gering ist, daß sie nicht von sich aus zu der verlangten Festigkeit und Formhaltigkeit der Wursthülle beiträgt. Diese wird vielmehr bislang ausschließlich von derjenigen des textilen Grundmaterials bestimmt. Collagen und derartige faserhaltige organische Quellmassen haben eine viel geringere Reißdehnung als die angegebene mögliche Dehnung einer als Grundmaterial verwendeten Maschenware, so daß sie für die Imprägnierung solchen Grundmaterials nicht in Frage zu kommen schienen.

Weitere Bedenken gegen die Verwendung eines in sich selbst nicht umfangsstabilen Gestricks resultierten aus der Beobachtung, daß bei der Dehnung eines solchen Gestricks an den Bindungsstellen starke Relativbewegungen der einander überkreuzenden Fäden stattfinden. Betrachtet man beispielsweise ein rundgestricktes Grundmaterial bei der Umfangsdehnung, so stellt man fest, daß bei jeder Masche die in Umfangsrichtung verlaufenden Maschenköpfe und- füße auf Kosten der in Längsrichtung verlaufenden Maschenschenkel länger werden. Mithin findet eine Fadenbewegung über die Bindungspunkte hinweg statt, und zwar bei den einander überkreuzenden Fäden in entgegengesetzter Richtung. Wenn sich an dieser Stelle Imprägnierungsmaterial befindet, so mußte man damit rechnen, daß die jeweils am einen und anderen Faden haftenden Imprägnierungsteile von den beiden Fäden in entgegengesetzter Richtung mitgerissen und somit voneinander getrennt werden ; dies bedeutet die Zerstörung der Imprägnierung an den Bindungspunkten.

Wenn man Maschenware als textiles Grundmaterial für Wursthüllen verwenden wollte, mußte man deshalb nach einem Weg suchen, der das Grundmaterial in sich selbst verfestigte, um dadurch die beiden die Imprägnierung gefährdenden Effekte nämlich die Dehnung in Umfangsrichtung und die Relativbewegung an den Bindungspunkten, auszuschließen. Eine solche Lösung fand man darin, daß die Maschenware mit einem in Umfangsrichtung verlaufenden Einlegefaden versehen wird, der die Umfangskräfte aufnimmt und dadurch die Kaliberhaltigkeit der Wurst gewährleistet (DE-B 24 33 751). Diese bekannte Wursthülle ist in Umfangsrichtung kaum dehnbar, war für die meisten Anwendungsfälle wegen der dadurch begründeten Kaliberhaltigkeit erwünscht ist.

Jedoch gibt es andere Anwendungsfälle, in denen man eine etwas größere Umfangsdehnbarkeit der Wursthülle ähnlich derjenigen von natürlichem Darmmaterial wünscht und die in der Größenordnung von beispielsweise 20-50 % liegt.

Man hätte in diesem Zusammenhang an die Verwendung stark dehnbarer Fäden für das textile Grundmaterial denken können. Jedoch kommen für Wursthüllen nur hochfeste, sehr dünne Fadenwerkstoffe in Betracht, die derart große Dehnungswerte — zumindest nicht in Kombination mit den übrigen für Wursthüllen erforderlichen Eigenschaften — zur Verfügung stellen.

Der Erfindung liegt daher die Aufgabe zugrunde, eine Wursthülle der eingangs genannten Art zu schaffen, die eine begrenzte Umfangsdehnung gestattet. Die erfindungsgemäße Lösung besteht darin, daß die in Längsrichtung glatten Fäden der Maschenware ausschließlich in Form von in Längs- und Umfangsrichtung verformbaren Maschen gebunden sind, deren mittlere Maschenabmessung mindestens etwa 8 mal so groß ist wie der Fadendurchmesser und deren freie Fläche mindestens etwa 60 % beträgt.

Die Erfindung verzichtet auf Änderungen an der Maschenware, die dieser als solcher Kaliberhaltigkeit verleihen. Statt dessen erreicht sie das gewünschet Maß an Kaliberhaltigkeit und der erforderlichen Dehnbarkeitsbegrenzung durch das zusammenwirken des nicht kaliberhaltigen textilen Grundmaterials mit der ebenfalls nicht kaliberhaltigen Imprägnierung. Das Ergebnis ist überraschend, weil die Imprägnierung weder aufgrund der Umfangsdehnung noch infolge der Beanspruchung an den Bindungspunkten des Gewirks zerreißt und weil offenbar die Imprägnierung trotz ihrer geringen relativen Eigenfestigkeit das Gewirk an der zu erwartenden, viel stärkeren Umfangsdehnung hindert. Eine sichere Erklärung für diese Effekte steht noch aus. Vermutet werden kann nur folgendes.

Wahrscheinlich ist die Dehnbarkeit der in den Maschenöffnungen ausgespannten Imprägnierungshäutchen ungewöhnlich groß, weil die spezielle Mechanik des Maschenzusammenhangs dann, wenn in der einen Richtung eine Dehnung stattfindet, gleichzeitig in der anderen Richtung eine Kontraktion erzwingt. Die Imprägnierungshäutchen sind jeweils in einen von den Fäden einer Masche gebildeten Rahmen eingespannt, der in der Umfangsrichtung nur dann länger werden kann, wenn er in der Längsrichtung gleichzeitig kürzer wird. Daher kann die von einem Imprägnierungshäutchen überspannte Fläche durch die Umfangsdehnung nicht größer werden. Man darf also annehmen, daß die Dehnung des Imprägnierungsmaterials in der einen Richtung ständig durch eine erzwungene Kontraktion in der anderen Richtung kompensiert wird, wodurch die Beanspruchung des Materials und die Gefahr seines mechanischen Versagens beträchtlich reduziert wird.

Gleichzeitig bildet jedes eine Maschenöffnung überspannende Imprägnierungshäutchen einer Feder, die der geschilderten Deformation Widerstand entgegensetzt, worauf die erfindungsgemäß erzielte Dehnungsbegrenzung teilweise zurückgeführt werden mag. Nur die vor Überbeanspruchung schützende Einspannung jedes Imprägnierungshäutchens in einen gesonderten Rahmen von Maschenfäden gestattet es, die Federwirkung des Imprägnierungsmaterials zu nutzen. Offensichtlich setzt die Nutzung dieser Federwirkung voraus, daß jedes Imprägnierungshäutchen fest mit den umgebenden Maschenfäden verbunden ist, weil anderenfalls die erforderliche Kraftübertragung nicht stattfinden könnte. Jedoch steht die zu vermutende feste Verbindung im Widerspruch zu der Tatsache, daß die Imprägnierung von der gegensätzlichen Relativbewegung der Fäden in den Bindungspunkten nicht beschädigt zu werden scheint. Dies kann nämlich nur dadurch erklärt werden, daß die Fäden sich innerhalb des Imprägnierungsmaterials frei verschieben können. Man muß sich also vorstellen, daß die Adhäsion der gequollenen Imprägnierung an den Fäden so gering ist, daß in dem Imprägnierungsmaterial Kanäle gebildet werden, in welchen sich die Fäden in Längsrichtung mit relativ geringer Reibung bewegen können. Dies ist um so erstaunlicher, als das Imprägnierungsmaterial im gequollenem Zustand bei der Füllung sehr weich ist und nur in äußerst geringer Dicke von wenigen hundertstel Millimetern auf den Fäden im Bereich eines Kreuzungspunkts aufliegt.

Gleichwohl dürfte auch die Reibung der Fäden gegeneinander und im Verhältnis zu der Imprägnierung bei den die erfindungsgemäße Wursthaut prägenden Effekten eine Rolle spielen, indem sie dazu beiträgt, daß das textile Grundmaterial sich nicht im erwarteten Ausmaß dehnen kann. Ferner verursacht die Reibung eine Hysterese, die bei der Formgebung der Wurst während des Füllvorgangs die Möglichkeit gibt, die Wurst abweichend von der zylindrischen Gestalt zu formen. Bei der Füllung lassen sich dadurch Ungleichmäßigkeiten hinsichtlich Dicke und Krümmung erzielen, die einen naturhaften, handwerklichen Eindruck vermitteln, und einen erwünschten Gegensatz zu dem oftmals etwas industriell wirkenden Eindruck vollkommen zylindrischer Würste bilden. Diese Ungleichmäßigkeiten können durch geeignete Lenkung des Füllvorgangs auch gezielt hervorgerufen werden, beispielsweise gebogene Würste, die an einem Ende etwas dicker als am anderen Ende sind.

Abgebundene Hüllenenden bilden sich praktisch faltenfrei und — bei hängender Klimatisierung — am unteren Ende kurz und gleichmäßig gerundet.

Wenn im Zusammenhang der Erfindung von ausschließlich maschenförmiger Bindung die Rede ist, so soll damit der mehr oder weniger geradlinige Durchlauf von Fäden in Umfangsrichtung oder mit maßgeblicher Umfangs-Richtungskomponente ausgeschlossen werden und soll ein Gewirk oder Gestrick bezeichnet werden, das sich in Längs- und Querrichtung weitgehend frei verformen läßt. Dafür eignen sich besonders solche Maschen, die ausschließlich in der Grundbindung der Gestricke bzw. Kuliergewirke vorliegen. Es kann sich dabei vorhehmlich um eine Rechts/Links-, Rechts/Rechts- oder Links/Links-Grundbindung handeln.

Das Anspruchsmerkmal, daß die mittlere Maschenabmessung (das ist das arithmetische Mittel der in Längs- und Querrichtung gemessenen Fadenmittenanstände) mindestens etwa 8 mal so groß ist wie der Fadendurchmesser, dient der Abgrenzung von solchen Gewirken, deren Fadendicke so groß ist im Verhältnis zur Maschenweite, daß schon allein dadurch eine Begrenzung der Dehnbarkeit zustandekommt. Vorzugsweise ist im Rahmen der Erfindung die mittlere Maschenabmessung etwa so groß wie oder größer als der 12-fache Fadendurchmesser. Dem gleichen Zweck der Abgrenzung dient auch das Merkmal, daß die freie Maschenfläche mindestens etwa 60 % beträgt. Ausgeschlossen werden durch dieses Merkmal auch solche Gewirke, die in einer Richtung so stark gestreckt sind, daß die in dieser Richtung verlaufenden Fäden sehr nahe beieinanderliegen. Vorzugsweise ist die freie Maschenfläche größer als 75 % und weiter vorzugsweise zwischen etwa 85 und 95 %. Diese Angaben beziehen sich auf die ungefüllte, entspannte Wursthülle. Auch im gefüllten Zustand werden sie trotz der dann stattgehabten Umfangsdehnung im allgemeinen noch erfüllt sein.

Eine regelmäßige, die Imprägnierung nicht schädigende Dehnung erzielt man am leichtesten, wenn die Fäden in der Wursthülle in geometrisch regelmäßiger, rechteckähnlicher Form vorhanden sind. Die Maschen werden deshalb zweckmäßigerweise in flächengespannter Form fixiert. Das kann einerseits in an sich bekannter Weise dadurch geschehen, daß die Imprägnierung auf der flächengespannten Maschenware aufgebracht und verfestigt (beispielsweise getrocknet) wird. Jedoch hat es sich statt dessen oder zusätzlich als zweckmäßig erwiesen, die Maschen des aus thermoplastischem Werkstoff bestehenden Fadens zu thermofixieren. Dies ist ein Verfahren, bei dem die Maschen in flächengespannter Form durch Erhitzung so stark ganz oder teilweise erweicht werden, daß sie ihre elastischen Kräfte verlieren und die ihnen aufgezwungene Form plastisch annehmen. Danach werden sie gekühlt, so daß sie diese Gestalt behalten.

Zweckmäßigerweise wird ein monofiler Faden verwendet, da dieser sich leicht verarbeiten und leicht thermofixieren läßt und die geringste Reibung gegenüber der ihn umgebenden, gequollenen Imprägnierung aufweist. Jedoch sind auch multifile Fäden verwendbar, sofern sie in Längsrichtung hinreichend glatt sind, um sich in der Imprägnierung verschieben zu können. Selbstverständlich werde solche Werkstoffe für den Faden bevorzugt, die eine geringe Adhäsion zu dem Imprägnierungsmaterial aufweist. Gegebenenfalls kann der Faden mit einer Appretur oder Beschichtung versehen sein, die die Adhäsion der Imprägnierung auf das gewünschte Maß herabsetzt, um die gewünschte Relativverschieblichkeit ohne Zerstörung der Imprägnierung an den Bindungspunken zu ermöglichen.

Das Ausmaß der erzielbaren Dehnung wird von der geometrischen Ausgangsform der Maschen beeinflußt. Je größer die Längsabmessung der Maschen im Verhältnis zur Umfangsabmessung ist, um so größer ist die zu erwartende Umfangsdehnung. Will man eine beträchtliche Dehnbarkeit von beispielsweise 50 % erzielen, so wird man zweckmäßigerweise von einer etwa quadratischen Form oder sogar von einer in Wurstlängsrichtung gelängten Form der Maschen im ungespanntem Zustand der Wursthülle vor der Füllung ausgehen. Wünscht man eine geringere Dehnbarkeit, so wählt man eine Maschenform mit größerer Abmessung in Umfangsrichtung als in Längsrichtung. Wünscht man eine geringe und dennoch natürlich wirkende Dehnung, so wählt man ein Verhältnis von Umfangs- zu Längsabmessung der Maschen von etwa 1,5 bis 1,8 : 1. Je größer dieses Verhältnis ist, um so geringer ist auch die Dehnungsbeanspruchung der Imprägnierung und um so dehungsempfindlichere Imprägnierungen können verwendet werden.

Die Dehnungsempfindlichkeit der Imprägnierung kann weiter dadurch verringert werden, daß man sie mit einer von der Längsrichtung abweichenden Faserrichtung aufträgt, wobei die Faserrichtung mindestes um etwa 30°, zweckmäßigerweise aber um mehr als 45° von der Längsrichtung abweicht, beispielsweise um 60° liegt. Wenn in diesem Zusammenhang von Faserrichtung gesprochen wird, so ist stets die mittlere oder überwiegende Faserrichtung gemeint.

Als vorteilhaft hat es sich auch erwiesen, die Abweichung der Faserrichtung von der Längsrichtung auf der einen und der anderen Seite der Wursthülle entgegengesetzt auszurichten, so daß sich kreuzende Faserrichtungen entstehen.

Die Eigenschaften des textilen Grundmaterials werden im Zusammenhang der Erfindung, wie üblich, ohne Berücksichtigung der Eigenfestigkeit der Imprägnierung nach den aufzunehmenden Kräften bemessen. Für ein Ausgangskaliber von 60 mm verwendet man beispielsweise ein Gewirk von 13 g/m² aus einem monofilen Garn aus Polyamid 6 mit einer Dicke von 0,045 mm. Dies ergibt eine Maschenweite von etwa 0,7 mm in beiden Richtungen bei quadratischer Aufspannung. Zweckmäßig ist eine Maschenweite zwischen etwa 0,4 mm und 1 mm vorzugsweise 0,5 bis 0,8 mm, gemessen bei quadratischer Aufspannung. Die Stärke der Imprägnierung liegt zweckmäßigerweise zwischen 20 g/m² und 40 g/m², in dem angegebenen konkreten Beispiel bei 30 g/m².

Der optische Eindruck der erfindungsgemäßen Wursthülle ist ausgezeichnet, nämlich klar und zart, wobei die Struktur des textilen Grundmaterials bei näherer Betrachtung regelmäßig gewebeartig erscheint. In diesem Zusammenhang ist es vorteilhaft, wenn die Imprägnierung überwiegend auf der Außenseite des textilen Grundmaterials liegt. Der Vorteil des guten optischen Eindrucks geht insofern auf die Art des textilen Gundmaterials zurück, als dieses eine gleichmäßigere Imprägnierung als rundgewebte Wursthüllen oder solche nach der DE-B-24 33 751 gestattet. Während jene ein festes Durchmessermaß besitzen, das sie bei Minustoleranz stramm über den inneren Imprägnierungsring mit entsprechend dünner Innenimprägnierung gleiten läßt, wohingegen sie bei Plustoleranz am äußeren Gegenring anliegen können und eine dicke Innenimprägnierung gestatten, liegt die erfindungsgemäße Maschenware aufgrund ihrer leichten Dehnbarkeit stets absolut gleichmäßig an dem äußeren Gegenring an, so daß sich unter allen Umständen eine gleichmäßig dicke Innenbeschichtung erzielen läßt. Diese liegt nach dem Wenden der Hülle auf der Außenseite und verleiht ihr das erwünschte gleichmäßig-klare Aussehen.

Einige wesentliche Gesichtspunkte der Erfindung werden im Folgenden anhand der Zeichnung erläutert, die in

Figur 1 eine vergrößerte Darstellung, eines Ausschnitts aus der Wursthülle und in

Figur 2 und 3 eine einzelne Masche im ungedehnten und gedehnten Zustand in noch weiterer Vergrößerung zeigt.

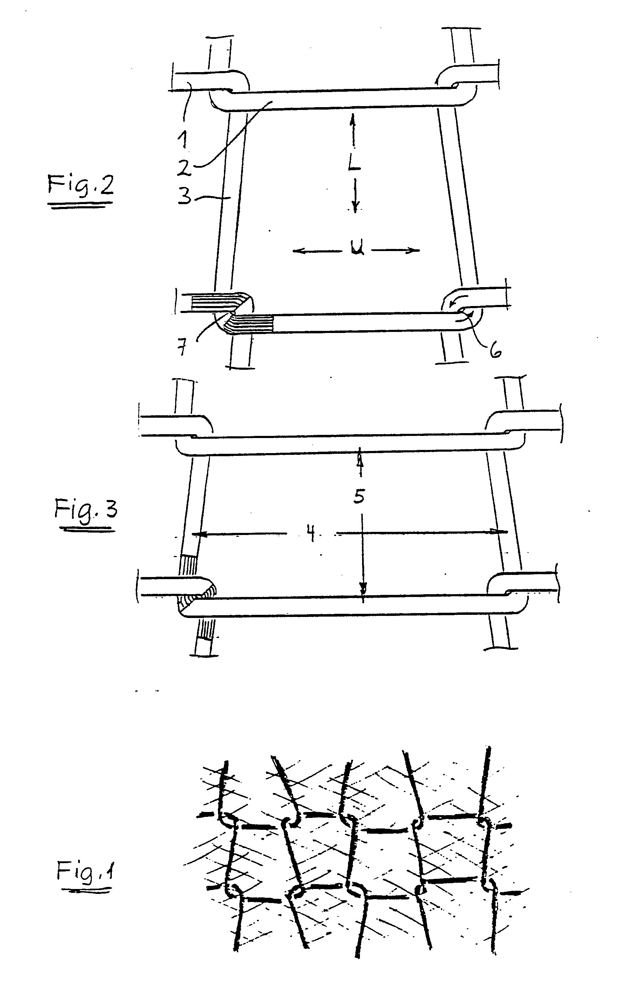

Der Fig. 1 entnimmt man einen Fadenverlauf der Maschenware mit etwa quadratisch dimensionierten Maschenabmessungen sowie die durch Schraffur angedeutete Imprägnierung, wobei die beiden Schraffurrichtung die Faserrichtungen der Imprägnierung auf der Innen- bzw. Außenseite der Hülle andeuten sollen. Am Produkt sind die Faserrichtungen nicht ohne weiteres sichtbar, weil die Imprägnierung glasklar die Fäden überzieht und die Maschenzwischenräume überspannt ; jedoch läßt sich die Maschenrichtung durch mikroskopische, polarisationsoptische oder Strukturuntersuchungen leicht ermitteln. Die von der Längsrichtung abweichende Fa-

serrichtung der Imprägnierung kann durch das Verstreichen der Imprägnierung mittels relativ zur Wursthülle rotierender Streichringe geschehen. Wenn auf der Außen- und Innenseite unterschiedliche Faserrichtung gewünscht wird, läßt man die Streichringe innen und außen in entgegengesetzter Richtung rotieren.

Die Imprägnierung hüllt die Fäden des textilen Grundmaterials auf allen Seiten ein und umgibt und durchdringt auch die Bindungspunkte. Im Gegensatz zu Wursthüllen, deren textiles Grundmaterial aus Maschenware mit Einlegefäden besteht, wird die maximale Dicke des Grundmaterials von nur zwei Fadendicken an den Bindungspunkten bestimmt, so daß sich im fertigen Material geringerere Dickenunterschiede ergeben, was dem gleichmäßigen optischen Eindruck zugute kommt.

Wenn eine Masche gemäß Fig. 2 und 3 in Umfangsrichtung, die durch den Pfeil U angedeutet ist, gedehnt wird, weil die in Umfangsrichtung wirkenden Kräfte größer sind als die in Längsrichtung (angedeutet durch Pfeil L), längen sich die Maschenköpfe 1 und die Maschenfüße 2 auf Kosten der Maschenschenkel 3. Dabei wird die die Maschenöffnung überspannende Imprägnierungshaut in Umfangsrichtung im Sinne des Pfeils 4, die die Umfangsabmessung der Masche angibt, gedehnt, während sie in Längsrichtung, angegeben durch die Längsabmessung 5 der Masche, gestaucht wird. Die Verformung der Masche findet statt unter entsprechender Relativbewegung der in den Bindungspunkten sich überkreuzenden Fäden, wie dies durch Pfeile beim Bindungspunkt 6 angedeutet ist. Beim Bindungspunkt 7 sind durch Schraffur diejenigen Fadenabschnitte hervorgehoben, die sich bei der Dehnung durch den Bindungspunkt schieben. Diese Verschiebung vollzieht sich innerhalb der durch die Imprägnierung dargestellten Hülle, ohne daß diese beschädigt wird. Die elastische und/oder plastische Verformung der Imprägnierungshaut führt zu zusätzlichen Kräften, die auf das textile Grundmaterial übertragen werden und gemeinsam mit der bei der Verformung an den Fäden auftretenden Reibung die unbegrenzte Dehnung der Wursthülle verhindern.

Man kann die erfindungsgemäße Wursthülle gut in Längs- und Umfangsrichtung reißen. Dabei ist es als besonderer Vorteil zu werten, daß keine Einlegefäden vorhanden sind, die durch den Riß frei werden und dann den bei manchen Abnehmern wenig geschätzten Eindruck eines losen Haars hervorrufen können.

Füllbeispiel : Eine Wursthülle mit Kaliber 85 (Durchmesser 85 mm) im ungedehntem Zustand, die bei herkömmlicher, umfangsstabiler Ausführung des Grundmaterials weger der elastischen Materialdehnung dem Kaliber 90 zugerechnet wird, wurde mit üblichem Fülldruck per Hand gefüllt und dehnte sich dabei auf Kaliber 105 (24 % Dehnung). Gegen Ende des Füllvorgangs wurde der Darm stärker gebremst, so daß sich ein etwas größerer Fülldruck ergab, der im zuletzt gefüllten Darmabschnitt zu einer Dehnung auf Kaliber 125 (47 %) führte. Die gefüllte Wurst wies am Ende eine Verdickung im Vergleich mit ihrer durchnittlichen sonstigen Dicke auf, ein Effekt, der bislang nur bei entsprechend vorkonfektionierten, teuren Wursthüllen erzielbar war, die zudem ein weniger ansprechendes Oberflächenbild boten.

Bei der Schrumpfung des Wurstbräts während der Reifung folgt die Hülle dank ihrer Elastizität faltenlos.

**Patentansprüche**

1. Wursthülle bestehend aus textiler Maschenware und einer Imprägnierung aus faserhaltiger Quellmasse wie Collagen, dadurch gekennzeichnet, daß die in ihrer Längsrichtung glatten Fäden der Maschenware ausschließlich in Form von in Längs- und Querrichtung der Wursthülle verformbaren Maschen gebunden sind, deren mittlere Maschenabmessung mindestens etwa 8-mal so groß ist wie der Fadendurchmesser und deren freie Fläche mindestens etwa 60 % beträgt.

2. Wursthülle nach Anspruch 1, dadurch gekennzeichnet, daß die Maschen ausschließlich in Strickgrundbindung ausgebildet sind.

3. Wursthülle nach Anspruch 1 oder 2, dadurch gekennzeichnet, daß die Maschen in flächengespannter Form fixiert sind.

4. Wursthülle nach einem der Ansprüche 1 bis 3, dadurch gekennzeichnet, daß die Imprägnierung auf der flächengespannten Maschenware aufgebracht und verfestigt ist.

5. Wursthülle nach einem der Ansprüche 1 bis 4, dadurch gekennzeichnet, daß die Maschen des aus thermoplastischem Werkstoff bestehenden Fadens thermofixiert sind.

6. Wursthülle nach einem der Ansprüche 1 bis 5, dadurch gekennzeichnet, daß der Faden monofil ist.

7. Wursthülle nach einem der Ansprüche 1 bis 6, dadurch gekennzeichnet, daß die Maschen etwa quadratisch sind.

8. Wursthülle nach einem der Ansprüche 1 bis 6, dadurch gekennzeichnet, daß die Maschen in Umfangsrichtung länger als in Längsrichtung sind.

9. Wursthülle nach Anspruch 8, dadurch gekennzeichnet, daß das Verhältnis von Umfangs- zu Längsabmessung der Maschen bei etwa 1,5 bis 1,8:1 liegt.

10. Wursthülle nach einem der Ansprüche 1 bis 9, dadurch gekennzeichnet, daß die Imprägnierung eine wesentlich von der Axialrichtung abweichende mittlere Faserrichtung aufweist.

11. Wursthülle nach Anspruch 10, dadurch gekennzeichnet, daß die mittlere Faserrichtung um mehr als 45° von der Axialrichtung abweicht.

12. Wursthülle nach Anspruch 10 oder 11, dadurch gekennzeichnet, daß die mittlere Faserrichtung auf beiden Hüllenseiten in unterschiedlichem Richtungssinn von der Axialrichtung abweicht.

13. Wursthülle nach einem der Ansprüche 1 bis 12, dadurch gekennzeichnet, daß die Imprägnierung sich überwiegend auf den Außenseite der textilen Maschenware befindet.

## Claims

1. Sausage casing, consisting of a textile knit-fabric and an impregnation of a fibrous swelling composition, such as collagen, characterised in that the filaments, which are smooth in their longitudinal direction, of the knit-fabric are tied exclusively in the form of stitches which are deformable in the longitudinal and transverse directions of the sausage casing and the main stitch dimension of which is at least about eight times the filament diameter and the free area of which is at least 60 %.

2. Sausage casing according to Claim 1, characterised in that the stitches are exclusively formed in plain knitting.

3. Sausage casing according to Claim 1 or 2, characterised in that the stitches are fixed in a two-dimensionally tensioned form.

4. Sausage casing according to one of Claims 1 to 3, characterised in that the impregnation has been applied to the two-dimensionally tensioned knit-fabric and solidified.

5. Sausage casing according to one of Claims 1 to 4, characterised in that the stitches of the filament consisting of thermoplastic material have been thermofixed.

6. Sausage casing according to one of Claims 1 to 5, characterised in that the filament is a monofilament.

7. Sausage casing according to one of Claims 1 to 6, characterised in that the stitches are approximately square.

8. Sausage casing according to one of Claims 1 to 6, characterised in that the stitches are longer in the peripheral direction than in the longitudinal direction.

9. Sausage casing according to Claim 8, characterised in that the ratio of the peripheral and longitudinal dimensions of the stitches is about 1.5 to 1.8: 1.

10. Sausage casing according to one of Claims 1 to 9, characterised in that the impregnation has a mean fibre direction which substantially deviates from the axial direction.

11. Sausage casing according to Claim 10, characterised in that the mean fibre direction deviates from the axial direction by more than 45°.

12. Sausage casing according to Claim 10 or 11, characterised in that the mean fibre direction on the two sides of the casing deviates from the axial direction in different directions.

13. Sausage casing according to one of Claims 1 to 12, characterised in that the impregnation is located predominantly on the outside of the textile knit-fabric.

## Revendications

1. Gaine pour saucisson, faite de tissu maillé et d'une imprégnation d'une masse gonflante contenant des fibres telle qu'un collagène, caractérisée en ce que les fils du tissu maillé, lisses dans leur direction longitudinale, sont liés exclusivement sous forme de mailles déformables dans les directions longitudinale et transversale de la gaine pour saucisson, mailles dont la dimension moyenne est au moins 8 fois environ supérieure au diamètre du fil et dont la surface libre s'élève au moins à 60 % environ.

2. Gaine pour saucisson selon la revendication 1, caractérisée en ce que les mailles sont formées exclusivement en armature fondamentale de tricot.

3. Gaine pour saucisson selon la revendication 1 ou 2, caractérisée en ce que les mailles sont fixées sous forme tendue à plat.

4. Gaine pour saucisson selon l'une quelconque des revendications 1 à 3, caractérisée en ce que l'imprégnation est appliquée et solidifiée sur le tissu maillé tendu à plat.

5. Gaine pour saucisson selon l'une quelconque des revendications 1 à 4, caractérisée en ce que les mailles du fil qui est fait de matière thermoplastique sont thermofixées.

6. Gaine pour saucisson selon l'une quelconque des revendications 1 à 5, caractérisée en ce que le fil est monofilaire.

7. Gaine pour saucisson selon l'une quelconque des revendications 1 à 6, caractérisée en ce que les mailles sont approximativement carrées.

8. Gaine pour saucisson selon l'une quelconque des revendications 1 à 6, caractérisée en ce que les mailles sont plus longues en direction circonférentielle qu'en direction longitudinale.

9. Gaine pour saucisson selon la revendication 8, caractérisée en ce que le rapport de la dimension circonférentielle à la dimension longitudinale des mailles est de l'ordre d'environ 1,5 à 1,8 : 1.

10. Gaine pour saucisson selon l'une quelconque des revendications 1 à 9, caractérisée en ce que l'imprégnation présente une direction moyenne des fibres qui s'écarte nettement de la direction axiale.

11. Gaine pour saucisson selon la revendication 10, caractérisée en ce que la direction moyenne des fibres s'écarte de la direction axiale de plus de 45°.

12. Gaine pour saucisson selon la revendication 10 ou 11, caractérisée en ce que la direction moyenne des fibres s'écarte de la direction axiale dans des sens différents des deux côtés de la gaine.

13. Gaine pour saucisson selon l'une quelconque des revendications 1 à 12, caractérisée en ce que l'imprégnation se trouve principalement du côté extérieur du tissu maillé.

Fig. 2

Fig. 3

Fig. 1